# FASCICULE DE BREVET EUROPEEN

(11) **EP 2 435 592 B1**
(45) Date de publication et mention de la délivrance du brevet: **25.10.2017**
(21) Numéro de dépôt: 10723705.9
(22) Date de dépôt: 20.04.2010
(51) Int. Cl.: C22C 47/04, C04B 41/88, C23C 2/00

(54) **PROCEDE ET DISPOSITIF D'ENDUCTION METALLIQUE PAR VOIE LIQUIDE DE FIBRES EN MATERIAU CERAMIQUE**
VERFAHREN UND VORRICHTUNG ZUR FLÜSSIGMETALLBESCHICHTUNG VON FASERN AUS EINEM KERAMIKMATERIAL
METHOD AND DEVICE FOR THE LIQUID METAL COATING OF FIBERS MADE OF A CERAMIC MATERIAL

(30) Priorité: 25.05.2009 FR 0953415
(43) Date de publication de la demande: 04.04.2012
(73) Titulaire: Snecma, 75015 Paris (FR)
(72) Inventeur: FRANCHET, Jean-Michel, Patrick, Maurice, F-75018 Paris (FR); KLEIN, Gilles, Charles, Casimir, F-95540 Mery Sur Oise (FR); SANCHEZ, Gérald, 74230 Dingy St. Clair (FR)
(74) Mandataire: Boura, Olivier
(86) Numéro de dépôt international: PCT/FR2010/050753
(87) Numéro de publication internationale: WO 2010/136687

(56) Documents cités:
- EP-A- 0 931 846
- EP-A- 1 995 342

## Description

### Arrière-plan de l'invention

La présente invention se rapporte au domaine général des matériaux composites à matrice métallique. Elle concerne plus particulièrement un procédé et un dispositif d'enduction métallique par voie liquide de fibres en matériau céramique.

L'un des domaines d'application de l'invention est celui de l'aéronautique, et plus précisément celui des turboréacteurs dans lesquels le recours à des matériaux composites à matrice métallique permet une importante réduction de masse.

De façon connue, les matériaux composites à matrice métallique sont constitués d'une matrice à base d'alliage métallique renforcée par des fibres, celles-ci étant par exemple en céramique. Ces matériaux ont un haut niveau de performances en raideur et en résistance et peuvent être utilisés à la place d'alliages monolithiques pour réaliser des pièces d'un turboréacteur telles que les disques de compresseur ou de turbine, les arbres, les corps de vérins, etc.

De façon avantageuse, les matériaux composites à matrice métallique peuvent également être utilisés pour réaliser des renforts locaux qui sont mis en place dans des pièces en alliages monolithiques telles que des aubes, des carters, des entretoises, etc. Dans ce cas, les renforts sont généralement fabriqués à partir d'un semi-produit appelé fibre enduite qui est constitué d'une armature centrale en céramique revêtue d'une gaine métallique.

Le revêtement de l'armature en céramique de ces fibres enduites peut être effectué en phase vapeur sous champ électrique, par électrophorèse ou encore par enduction par voie liquide dans un bain de métal liquide. Le document EP 0,931,846 décrit à cet effet un procédé d'enduction métallique par voie liquide de fibres en matériau céramique. Ce procédé consiste essentiellement à maintenir une charge de métal en fusion et lévitation à l'intérieur d'un creuset et à faire défiler une fibre tendue en matériau céramique au travers de cette charge. A la sortie du bain de métal, la fibre est revêtue d'un revêtement métallique dont l'épaisseur dépend notamment de la vitesse de défilement de la fibre.

Dans la pratique, il a été constaté que la qualité du revêtement obtenu par ce type de procédé d'enduction par voie liquide dépend pour beaucoup de la hauteur instantanée de fibre immergée dans la charge de métal. En effet, au fur et à mesure de l'enduction, la masse de la charge diminue, ce qui entraîne automatiquement une baisse de la hauteur instantanée de fibre immergée dans celle-ci si la position de la fibre dans le creuset est maintenue constante. Aussi, l'épaisseur du revêtement va varier continument le long de la fibre enduite jusqu'à ce que les conditions nominales d'enduction ne soient plus respectées entraînant alors l'interruption de l'enduction. Il en résulte que pour une charge de métal donnée, la qualité du revêtement obtenu n'est acceptable que pour une longueur limitée de fibre qui est fonction de l'épaisseur du revêtement choisie. Par exemple, pour des charges d'un volume de 50 cm³ et dans le cas d'un revêtement de faible épaisseur, la longueur de fibre enduite de qualité acceptable pourra atteindre quelques centaines de mètres. En revanche, pour un revêtement plus épais (de l'ordre de 50µm), la longueur de fibre enduite de qualité acceptable ne dépassera pas quelques dizaines de mètres.

Par conséquent, la qualité de la fibre enduite obtenue par un procédé d'enduction par voie liquide, même si elle reste acceptable, n'est pas optimale dans la mesure où l'épaisseur du revêtement n'est pas constante sur toute la longueur de fibre enduite. Corrélativement, la productivité de ce type de procédé d'enduction est relativement faible puisque la longueur de fibre enduite est limitée.

Pour résoudre ce problème et réaliser des fibres enduites de grandes longueurs, il a été proposé de recharger le bain de métal en fusion au cours de l'enduction à l'aide de poudres, de baguettes ou de fibres. Toutefois, cette solution présente l'inconvénient d'être relativement onéreuse car les formes d'approvisionnement en fibres ou poudres sont chères. En outre, l'incorporation de matière nouvelle dans un bain donné peut conduire à des instabilités qui nuisent au processus d'enduction.

### Objet et résumé de l'invention

La présente invention a donc pour but principal de pallier de tels inconvénients en proposant un procédé et un dispositif d'enduction permettant de réaliser des fibres enduites de grandes longueurs à un coût modéré.

Ce but est atteint grâce à un procédé selon la revendication 1.

Corrélativement, l'invention vise un dispositif selon la revendication 7.

L'invention propose ainsi de déplacer la fibre dans la charge de métal en fonction de la réduction de sa masse de sorte à maintenir constante la hauteur instantanée de fibre immergée. Cette solution présente de nombreux avantages. En particulier, la longueur de fibre enduite obtenue par ce procédé peut être augmentée au minimum d'un facteur 5 avec une seule charge, c'est-à-dire sans avoir à incorporer de matière nouvelle. Par ailleurs, en l'absence de matière nouvelle, la charge en fusion présente une bonne homogénéité et la qualité de l'enduction s'en trouve améliorée. Il en résulte que le procédé selon l'invention permet d'obtenir des fibres enduites de bonne qualité et de longueurs dites moyennes (c'est-à-dire comprises entre 200 et 600 m pour des charges d'un volume de 50 cm³ et des épaisseurs de 50µm) à un coût modéré. De plus grandes longueurs sont possibles en adaptant la taille du creuset au volume de la charge initiale. Ainsi, des longueurs dépassant le kilomètre peuvent être obtenues pour des charges d'environ 150 cm³.

De plus, ce procédé selon l'invention peut être réalisé en gardant tous les autres paramètres constants au cours de l'enduction. En particulier, de façon avantageuse, la vitesse de défilement de la fibre entre les poulies peut être maintenue sensiblement constante tout au long de l'enduction ce qui évite les problèmes de refroidissement de la fibre enduite. Enfin, cette solution n'empêche pas, pour l'obtention de fibres enduites de très grandes longueurs, d'avoir recours en parallèle à la technique décrite ci-avant consistant à recharger le bain de métal.

Selon une disposition avantageuse, le déplacement de la portion de fibre immergée dans la charge s'effectue selon une direction sensiblement perpendiculaire à la direction de défilement de la fibre. Dans ce cas, le déplacement de la portion de fibre immergée dans la charge peut être réalisé au moyen d'au moins un galet intercalé entre l'une des poulies et le creuset et pouvant se déplacer perpendiculairement à la direction de défilement de la fibre.

Selon une autre disposition avantageuse, le déplacement de la portion de fibre immergée dans la charge s'effectue à une vitesse calculée en fonction de la position initiale de la portion de fibre dans la charge, des caractéristiques initiales de la charge, de la vitesse de défilement de la fibre et de la capacité d'emport de la fibre.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique du dispositif d'enduction selon l'invention ; et
- les figures 2A à 2C illustrent un exemple de mise en oeuvre du procédé d'enduction selon l'invention.

### Description détaillée d'un mode de réalisation

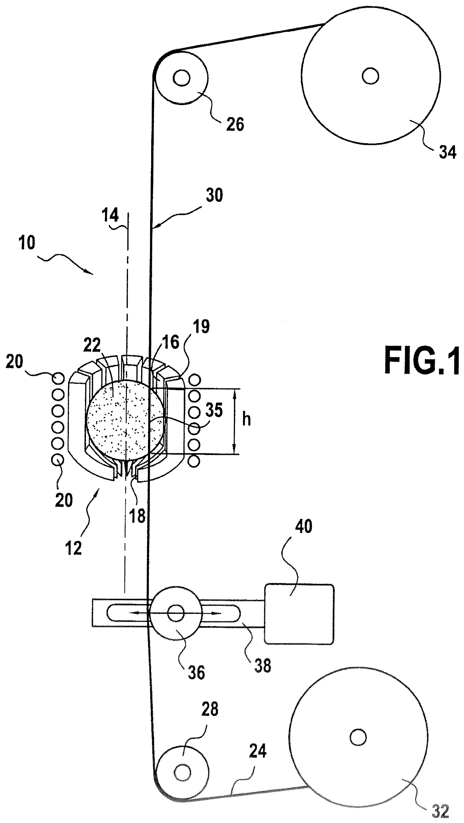

La figure 1 représente un dispositif 10 d'enduction métallique par voie liquide de fibres en matériau céramique selon l'invention.

Le dispositif 10 comporte notamment un creuset 12 de type froid, appelé aussi « creuset à lévitation », qui est conçu pour éviter la contamination du métal en fusion par le matériau constituant sa paroi. Ce type creuset est bien connu en soi et ne sera donc pas décrit en détails ici. Si besoin, on pourra se référer au document EP 0,931,846 qui en donne un exemple de réalisation.

Le creuset 12 présente une forme de bol de révolution autour d'un axe géométrique 14 vertical. Il comporte une ouverture supérieure 16 qui est plus large qu'une ouverture inférieure 18, ces ouvertures étant circulaires et centrées sur l'axe géométrique 14 vertical. Comme représenté sur la figure 1, il comporte encore une pluralité de fentes verticales 19 qui s'étendent entre ses ouvertures 16, 18. De façon connue en soi, ces fentes verticales 19 permettent d'adapter l'impédance électrique et de favoriser le refroidissement du creuset.

Le creuset 12 est par ailleurs entouré par un inducteur hélicoïdal 20 également centré sur l'axe géométrique 14 et capable de créer un champ électromagnétique dont les caractéristiques permettent de maintenir en lévitation le métal liquide placé dans le creuset. Un circuit de refroidissement (non représenté) est en outre positionné autour de la paroi du creuset pour la refroidir.

Une charge 22 de métal en fusion, par exemple en alliage de titane, de forme sensiblement sphérique est maintenue en lévitation à la température appropriée à l'intérieur du creuset 12. Le champ électromagnétique créé par l'inducteur hélicoïdal 20 permet d'écarter la surface de la charge 22 de la paroi du creuset. Pendant la phase de mise en fusion de la charge, la fibre à enduire est maintenue en dehors de la zone fondue (phase non représentée).

Pour l'enduction, une fibre 24 en matériau céramique est d'abord basculée au travers du creuset 12 puis maintenue tendue entre une poulie folle supérieure 26 et une poulie folle inférieure 28 qui sont disposées de part et d'autre du creuset et positionnées horizontalement l'une par rapport à l'autre de telle manière que la portion 30 de fibre qui est tendue entre ces poulies est, en cours d'enduction, sensiblement parallèle à l'axe géométrique 14 et immergée dans la charge 22 de métal en fusion. Ces poulies folles 26, 28 assurent le guidage de la fibre 24.

Le dispositif d'enduction comporte encore une bobine émettrice de fibres 32 disposées en-dessous du creuset 12, une bobine réceptrice de fibres enduites 34 disposées au-dessus du creuset, et des moyens non représentés d'entraînement en rotation des bobines.

Le fonctionnement du dispositif d'enduction découle de manière évidente de ce qui précède. La mise en rotation des bobines 32, 34 permet de faire défiler à une vitesse prédéterminée la fibre entre les poulies folles 26, 28. Au cours de l'enduction, une portion 30 de fibre traverse de part en part la charge 22 de métal en fusion (du bas vers le haut) et se charge ainsi de métal liquide. A sa sortie du bain de métal, la fibre est revêtue d'un revêtement métallique, l'épaisseur de ce revêtement dépendant notamment de la vitesse prédéterminée à laquelle la fibre défile entre les poulies.

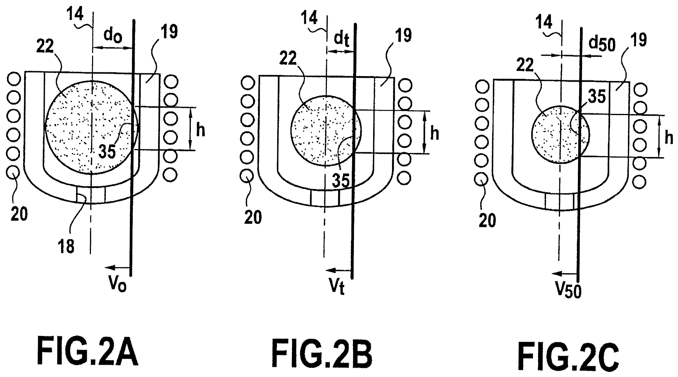

Le dispositif selon l'invention comporte en outre des moyens pour déplacer au cours de l'enduction la portion 35 de fibre qui est immergée dans la charge 22 de métal en fusion en fonction du volume restant de celle-ci. A titre d'exemple, ces moyens peuvent se présenter sous la forme d'un galet 36 intercalé entre le creuset 12 et la poulie inférieure 28, ce galet pouvant se déplacer sur un rail 38 perpendiculaire à la direction de défilement de la fibre par actionnement d'un moteur 40. A l'aide d'un tel galet, la position de la portion immergée 35 de fibre par rapport à l'axe géométrique 14 peut être modifiée en déplaçant la fibre dans l'une des fentes verticales 19 du creuset (figures 2A à 2C). Bien entendu, un galet pourrait (alternativement ou cumulativement) être intercalé entre la poulie supérieure et le creuset.

Par ailleurs, le galet 36 est déplacé sur le rail 38 de telle manière que la hauteur instantanée h de la portion 35 de fibre qui est immergée dans la charge 22 de métal en fusion reste sensiblement constante tout au long de l'enduction. Si la position de la fibre par rapport à l'axe géométrique 14 restait inchangée au cours de l'enduction, le volume de la charge de métal en fusion diminuant au fur et à mesure que progresse l'enduction, la hauteur instantanée de fibre qui est immergée dans la charge baisserait nécessairement.

Pour maintenir la hauteur immergée h constante, il convient d'asservir la vitesse de déplacement du galet 36 sur le rail 38 au volume de la charge 22 de métal en fusion tel qu'il évolue au cours de l'enduction. Une estimation du volume de la charge peut être calculée au cours de l'enduction en se basant sur les hypothèses suivantes : la forme de la charge 22 reste sphérique tout au long de l'enduction, et la portion 35 de fibre qui traverse de part en part la charge s'apparente à une corde de cette sphère de métal. Ainsi, en connaissant le volume V(t) de la sphère de métal au cours de l'enduction, il est possible d'en déduire le rayon r(t) de celle-ci et donc la vitesse de déplacement à appliquer à la fibre pour que la hauteur instantanée h reste constante (la hauteur h est fonction de r(t) notamment).

On décrira maintenant en liaison avec les figures 2A à 2C deux exemples de mise en oeuvre d'un tel calcul de la vitesse de déplacement à appliquer à la fibre pour que la hauteur instantanée h de fibre immergée reste constante.

Ces exemples de calcul ont été réalisés pour des charges initiales de métal respectivement de 44 cm³ et 120 cm³, une hauteur instantanée h constante de 37,40 mm, une vitesse de défilement de la fibre entre les bobines de 3 m/s et un emport de charge de 3,3 cm³/min.

Les paramètres obtenus pour la charge de 200g sont les suivants :
- distance horizontale initiale d₀ (à t=0s) entre la portion 35 de fibre immergée et l'axe géométrique 14 (étape correspondant à la figure 2A) : 11,53 mm
- vitesse initiale V₀ de déplacement appliquée à la fibre : 3,12 mm/min
- distance horizontale finale d₅₀ (à t=50s) entre la portion 35 de fibre immergée et l'axe géométrique 14 (étape correspondant à la figure 2C) : 8,41 mm
- vitesse finale V₅₀ de déplacement appliquée à la fibre : 4,44 mm/min.

Pour une telle charge de 44 cm³, le galet 36 représenté sur la figure 1 doit donc pouvoir être déplacé sur le rail 38 à une vitesse comprise entre 3,12 mm/min et 4,44 mm/min.

Quant aux paramètres obtenus pour la charge de 120 cm³, ils sont les suivants :
- distance horizontale initiale d₀ (à t=0s) entre la portion 35 de fibre immergée et l'axe géométrique 14 : 24,10 mm
- vitesse initiale V₀ de déplacement appliquée à la fibre : 1,08 mm/min
- distance horizontale finale d₂₀₀ (à t=200s) entre la portion 35 de fibre immergée et l'axe géométrique 14 : 19,94 mm
- vitesse finale V₂₀₀ de déplacement appliquée à la fibre : 1,44 mm/min.

Pour cette charge de 120 cm³, le galet 36 doit pouvoir être déplacé sur le rail 38 à une vitesse comprise entre 1,08 mm/min et 1,44 mm/min. Les charges de 120 cm³ offrent donc l'avantage par rapport aux charges de 44 cm³ de nécessiter une plage de régulation de la vitesse de déplacement du galet 36 plus faible.

On notera que la figure 2B représente une étape intermédiaire entre les étapes initiale et finale des figures 2A et 2C, étape intermédiaire dans laquelle la distance entre la portion 35 de fibre immergée et l'axe géométrique 14 est notée dₜ et la vitesse de déplacement appliquée à la fibre est notée Vₜ.

## Revendications

1. Procédé d'enduction métallique par voie liquide de fibres en matériau céramique, consistant à maintenir une charge (22) de métal en fusion et lévitation de forme sensiblement sphérique à l'intérieur d'un creuset (12) et à faire défiler à une vitesse prédéterminée une fibre (24) tendue en matériau céramique entre une poulie supérieure (26) et une poulie inférieure (28) disposées de part et d'autre du creuset de sorte qu'une portion (35) de fibre soit immergée dans la charge pour la recouvrir d'un revêtement métallique, **caractérisé en ce qu'**il consiste en outre à déplacer au cours de l'enduction la portion de fibre immergée dans la charge en fonction du volume restant de celle-ci de telle manière que la hauteur instantanée (h) de fibre qui est immergée dans la charge reste constante tout au long de l'enduction.

2. Procédé selon la revendication 1, dans lequel le déplacement de la portion (35) de fibre immergée dans la charge (22) s'effectue selon une direction sensiblement perpendiculaire à la direction de défilement de la fibre.

3. Procédé selon la revendication 2, dans lequel le déplacement de la portion (35) de fibre immergée dans la charge (22) est réalisé au moyen d'au moins un galet (36) intercalé entre l'une des poulies (26, 28) et le creuset (12) et pouvant se déplacer perpendiculairement à la direction de défilement de la fibre.

4. Procédé selon l'une des quelconques revendications 1 à 3, dans lequel le déplacement de la portion (35) de fibre immergée dans la charge (22) s'effectue à une vitesse calculée en fonction de la position initiale de la portion de fibre dans la charge, des caractéristiques initiales de la charge, de la vitesse de défilement de la fibre et de la capacité d'emport de la fibre.

5. Procédé selon l'une des quelconques revendications 1 à 4, dans lequel le métal est un alliage de titane.

6. Procédé selon l'une des quelconques revendications 1 à 5, dans lequel la vitesse de défilement de la fibre entre les poulies (26, 28) est maintenue sensiblement constante tout au long de l'enduction.

7. Dispositif d'enduction métallique par voie liquide de fibres en matériau céramique, comportant :
un creuset (12) apte à réaliser la fusion d'une charge (22) de métal et de la maintenir en lévitation sous une forme sensiblement sphérique ; et
une poulie supérieure (26) et une poulie inférieure (28) aptes à recevoir une fibre (34) tendue en matériau céramique et disposées de part et d'autre du creuset de sorte qu'une portion (35) d'une fibre défilant entre ces poulies puisse être immergée dans la charge pour la recouvrir d'un revêtement métallique ;
**caractérisé en ce qu'**il comporte en outre des moyens (36, 38, 40) pour déplacer au cours de l'enduction la portion de fibre immergée dans la charge en fonction du volume restant de celle-ci de telle manière que la hauteur instantanée de fibre qui est immergée dans la charge reste constante tout au long de l'enduction et **en ce que** le dispositif comporte en outre des moyens pour asservir au cours de l'enduction la vitesse de déplacement de la portion de fil immergée dans la charge au volume restant de celle-ci.

## Patentansprüche

1. Verfahren zur Flüssig-Metallbeschichtung von Fasern aus Keramikmaterial, das darin besteht, eine Ladung (22) aus Metall mit im Wesentlichen kugeliger Form schmelzflüssig und im Schwebezustand innerhalb eines Schmelztiegels (12) zu halten und eine gespannte Faser (24) aus Keramikmaterial zwischen einer oberen Rolle (26) und einer unteren Rolle (28), welche auf beiden Seiten des Schmelztiegels angeordnet sind, mit einer vorbestimmten Geschwindigkeit hindurch laufen zu lassen, so dass ein Faserabschnitt (35) in die Ladung eingetaucht ist, um ihn mit einem metallischen Überzug zu überziehen, **dadurch gekennzeichnet, dass** es ferner darin besteht, im Laufe der Beschichtung den Faserabschnitt, der in die Ladung eingetaucht ist, in Abhängigkeit von ihrem verbleibenden Volumen derart zu bewegen, dass die momentane Faserhöhe (h), welche in die Ladung eingetaucht ist, während der gesamten Beschichtung konstant bleibt.

2. Verfahren nach Anspruch 1, bei dem die Bewegung des in die Ladung (22) eingetauchten Faserabschnittes (35) in einer Richtung erfolgt, die zu der Ablaufrichtung der Faser im Wesentlichen senkrecht verläuft.

3. Verfahren nach Anspruch 2, bei dem die Bewegung des in die Ladung (22) eingetauchten Faserabschnittes (35) mittels wenigstens einer Laufrolle (36), die zwischen einer der Rollen (26, 28) und dem Schmelztiegel (12) zwischengeschaltet ist und die sich zu der Ablaufrichtung der Faser senkrecht bewegen kann, vollzogen wird.

4. Verfahren nach einem der Ansprüche 1 bis 3, bei dem die Bewegung des in die Ladung (22) eingetauchten Faserabschnittes (35) mit einer Geschwindigkeit erfolgt, die in Abhängigkeit von der Ausgangsposition des Faserabschnittes in der Ladung, von den Ausgangseigenschaften der Ladung, von der Ablaufgeschwindigkeit der Faser und von der Mitnahmekapazität der Faser berechnet ist.

5. Verfahren nach einem der Ansprüche 1 bis 4, bei dem das Metall eine Titanlegierung ist.

6. Verfahren nach einem der Ansprüche 1 bis 5, bei dem die Ablaufgeschwindigkeit der Faser zwischen den Rollen (26, 28) während der gesamten Beschichtung im Wesentlichen konstant gehalten wird.

7. Vorrichtung zur Flüssig-Metallbeschichtung von Fasern aus Keramikmaterial, umfassend:
einen Schmelztiegel (12), der geeignet ist, das Schmelzen einer Metallladung (22) zu vollziehen und sie in einer im Wesentlichen kugeligen Form im Schwebezustand zu halten, und
eine obere Rolle (26) und eine untere Rolle (28), die geeignet sind, eine gespannte Faser (24) aus Keramikmaterial aufzunehmen, und die auf beiden Seiten des Schmelztiegels angeordnet sind, so dass ein Abschnitt (35) einer Faser, die zwischen diesen Rollen hindurch läuft, in die Ladung eingetaucht werden kann, um ihn mit einem metallischen Überzug zu überziehen,
**dadurch gekennzeichnet, dass** sie ferner Mittel (36, 38, 40) umfasst, um im Laufe der Beschichtung den Faserabschnitt, der in die Ladung eingetaucht ist, in Abhängigkeit von ihrem verbleibenden Volumen derart zu bewegen, dass die momentane Faserhöhe, welche in die Ladung eingetaucht ist, während der gesamten Beschichtung konstant bleibt, und dass die Vorrichtung ferner Mittel umfasst, um im Laufe der Beschichtung die Bewegungsgeschwindigkeit des Faserabschnittes, der in die Ladung eingetaucht ist, von ihrem verbleibenden Volumen abhängig zu machen.

## Claims

1. A method of coating ceramic material fibers in metal using a liquid technique, the method consisting in maintaining a charge (22) of molten metal in levitation in a substantially spherical shape inside a crucible (12) and in causing a tensioned ceramic material fiber (24) to travel at a predetermined speed between a bottom pulley (28) and a top pulley (26) disposed on either side of the crucible in such a manner that a portion (35) of fiber is immersed in the charge in order to be covered in a metal coating, the method being **characterized in that** it also consists in causing the portion of fiber that is immersed in the charge to shift during coating as a function of the remaining volume of the charge in such a manner that the instantaneous height (h) of fiber that is immersed in the charge remains substantially constant throughout the coating operation.

2. A method according to claim 1, wherein the shifting of the portion (35) of fiber that is immersed in the charge (22) takes place in a direction that is substantially perpendicular to the travel direction of the fiber.

3. A method according to claim 2, wherein the portion (35) of fiber that is immersed in the charge (22) is shifted by means of at least one wheel (36) interposed between one of the pulleys (26, 28) and the crucible (12) and capable of shifting perpendicularly to the travel direction of the fiber.

4. A method according to any one of claims 1 to 3, wherein the portion (35) of fiber that is immersed in the charge (22) is shifted at a speed that is calculated as a function of the initial position of the portion of fiber in the charge, of the initial characteristics of the charge, of the travel speed of the fiber, and of the coating pick-up capacity of the fiber.

5. A method according to any one of claims 1 to 4, wherein the metal is a titanium alloy.

6. A method according to any one of claims 1 to 5, wherein the travel speed of the fiber between the pulleys (26, 28) is maintained substantially constant throughout coating.

7. A device for coating ceramic material fibers in metal by a liquid technique, the device comprising:
• a crucible (12) suitable for melting a charge (22) of metal and for maintaining it in levitation in a substantially spherical shape; and
• a top pulley (26) and a bottom pulley (28) suitable for receiving a tensioned fiber (34) of ceramic material and located on either side of the crucible so that a portion (35) of a fiber traveling between the pulleys can be immersed in the charge in order to receive a metal coating;
the device being **characterized in that** it further includes means (36, 38, 40) for use during coating to shift the portion of fiber that is immersed in the charge as a function of the remaining volume of the charge in such a manner that the instantaneous height of fiber that is immersed in the charge remains substantially constant throughout the coating operation and **in that** the device further includes means for use during coating to servo-control the rate at which the portion of fiber that is immersed in the charge is shifted to the remaining volume of the charge.
